## Europäisches Patentamt

## European Patent Office

## Office européen des brevets

(19)

(11) Publication number: **0 222 359**
**B1**

(12)

# EUROPEAN PATENT SPECIFICATION

(45) Date of publication of the patent specification:
03.01.90

(51) Int. Cl.⁴: **F16J 1/02**, F16J 1/18, F02F 7/00, F02F 3/00

(21) Application number: 86115565.3

(22) Date of filing: 10.11.86

(54) Pistons.

(30) Priority: 13.11.85 GB 8528000

(43) Date of publication of application:
20.05.87 Bulletin 87/21

(45) Publication of the grant of the patent:
03.01.90 Bulletin 90/1

(84) Designated Contracting States:
DE FR GB IT

(56) References cited:
EP-A- 0 144 145
FR-A- 2 541 374
GB-A- 2 148 451
US-A- 4 440 069

(73) Proprietor: AE PLC, Cawston House Cawston, Rugby Warwickshire CV22 7SB(GB)

(72) Inventor: Ruddy, Brian Leonard, 32 Grassmere Avenue Linton Park, Wetherby Yorkshire(GB)

(74) Representative: Hadfield, Robert Franklin et al, T&N plc Group Patent Department Bowdon House Ashburton Road West Trafford Park, Manchester M17 1RA(GB)

## Description

The present invention relates to pistons and particularly to those types of pistons generally known as articulated pistons and more particularly to articulated pistons having skirt portions comprising plastics material.

Articulated pistons are pistons wherein the crown portion, which also often includes the gudgeon-pin bosses, is formed separately from the skirt portion. The two portions are usually joined by the gudgeon-pin as the two portions have a common gudgeon-pin axis. An example of such a construction is shown in US patent 4 440 069 of Holtzberg et al.

Such pistons have advantages in certain respects one of which advantages is the limitation of heat transference from the crown to the skirt. There are, however, disadvantages associated with articulated pistons, one of the more important of which from the performance aspect being the extra weight of a longer gudgeon-pin which is usually required to link the two portions. The gudgeon-pin mass is a very significant proportion of the total piston mass, especially in recent years where greater design effort is being devoted to reducing reciprocating mass. Lighter pistons allow lighter connecting rods and thus smaller bearings and so on.

According to the present invention there is provided an articulated piston, the piston comprising a crown portion having at least one piston-ring groove and gudgeon pin-bosses for receiving a gudgeon-pin having a bore therethrough and a skirt portion made of a plastics material and which is supported by at least one co-operating portion depending from the crown portion underside, the crown portion and skirt portion having diametrally directed bores therethrough, the bores having a common axis, the piston being characterised by the skirt portion being connected to the crown portion by stub-pins which pass through the diametrally directed bores in the skirt portion into either the diametrally directed bore of the crown portion or into the bore of the gudgeon-pin.

Preferably the stub-pins are made of plastics material such as, for example, glass-filled nylon, a polyetherketone or various amide-imide resins. Lightweight alloy stub-pins may however be used.

The stub-pins may be further utilised to centralise and to locate the gudgeon-pin, the stub-pins being retained by rubbing in constant or intermittent contact with the associated cylinder or cylinder liner wall.

Preferably the skirt portion of the piston may comprise a plastics materials such as, for example, polyetheretherketone (PEEK) or an alloy of PEEK and polyphenylene sulphide (PPS) such as that disclosed in US-A 421 588. A plastics material skirt has advantages; an important one of which is a reduction in noise caused by the piston skirt impacting on the cylinder bore.

The skirt portion may not exclusively comprise plastics material but may have metallic inserts included therein.

The skirt portion may be supported over the greater part of its area by the underlying crown portion which itself may comprise any suitable metallic material such as aluminium alloy or steel, for example. Alternatively the skirt portion may be structurally self-supporting and merely located by the bore of the gudgeon-pin or gudgeon-pin bosses. Any compromise between these two extremes may be used.

The crown portion of the piston may be constructed or produced in any desired manner known in the art. The crown portion may, for example, include a combustion bowl or have ceramic fibre inserts incorporated by a pressure casting method such as, for example, squeeze casting.

In order that the present invention may be more fully understood examples will now be described by way of illustration only with reference to the accompanying drawings of which:

Figure 1 shows a section through the plane including the piston axis and the gudgeon-pin axis of a piston according to the present invention;

Figure 2 shows a view of the piston of Figure 1 in the direction of the gudgeon-pin axis;

Figure 3 shows a view in the direction 'X' of the piston of Figure 2;

Figure 4 shows a section through a first alternative embodiment of the piston shown in Figure 1;

Figure 5 shows a view of a second alternative embodiment of a piston;

Figure 6 shows a view of the piston of Figure 5 in the direction 'Y';

Figure 7 shows a view of a third alternative embodiment of a piston;

Figure 8 shows a section taken through the plane A-A' of the piston of Figure 7 viewed in the direction 'Z';

Figure 9 shows a view in elevation of a fourth alternative embodiment of a piston;

Figure 10 shows a view in elevation of a fifth alternative embodiment of a piston; and

Figure 11 which shows a partially sectioned view of the piston of Figure 10 looking in the axial direction 'W'.

Referring now to the figures and where similar features are denoted by common reference numerals.

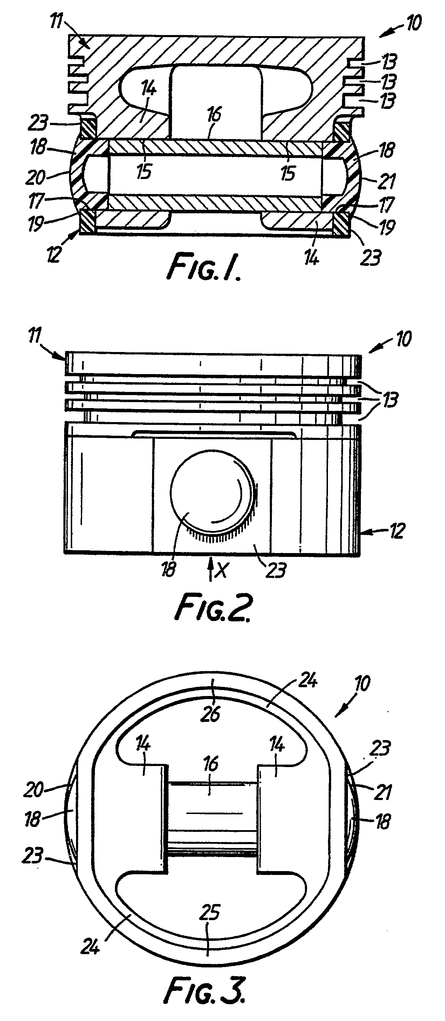

Figures 1, 2 and 3 show a piston generally indicated at 10. The piston comprises a crown portion 11 and a skirt portion 12. The crown portion 11 includes piston ring grooves 13, gudgeon-pin bosses 14 having bores 15. A gudgeon-pin 16 is shown in the bores 15. Surrounding the lower end of the crown portion 11 is the skirt portion 12, the skirt portion having bores 17 of substantially the same diameter as the gudgeon-pin bores 15 and also being axially coincident therewith. The skirt portion 12 in the embodiment shown is moulded from a PEEK-based plastics material and is located on the crown portion 11 by stub-pins 18 which pass through the bores 17 and into the bores 15 of the pin bosses 14. The stubpins 18 are moulded from glass reinforced nylon and have flanges 19 to prevent the stub-pins 18 from passing completely through the bores 17. The stub-pins 18 further serve to centralise the gudgeon-pin 16, which is of the fully floating type, in the pin bosses 14. The total axial length of the two stub-pins 18 and the gudgeon-pin 16 from head 20 to head 21 is slightly less than the diameter of the cylinder bore (not shown) into which the piston 10 fits and the stub-pins 18 are axially retained by intermittent rubbing against the cylinder wall. The moulded skirt portion 12 has flats 23 to accommodate the heads 20 and 21. The crown portion further includes a partially cylindrical portion 24 which serves to reinforce the skirt portion 11 in the loaded regions 25 and 26.

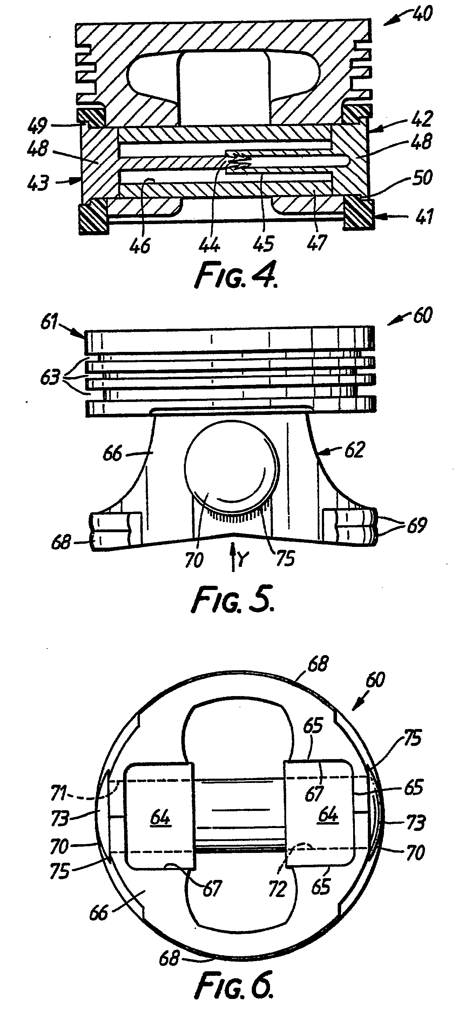

Figure 4 shows a piston 40 of basically similar construction to that shown in Figures 1, 2 and 3. The piston 40 differs, however, in that the skirt portion 41 is retained by stub-pins 42 and 43 which have mutually lockable extensions 44 and 45 which pass through the central hole 46 of the gudgeon-pin 47. The heads 48 of the stub-pins 42 and 43 again retain the skirt portion 41 by flanges 49 co-operating with circular rebates 50. In this embodiment the heads 47 do not rub on the associated cylinder wall (not shown) but are wholly located by the mutually lockable extensions 44 and 45.

Figures 5 and 6 show a piston 60 having a crown portion 61 and a skirt portion 62. The crown portion includes piston-ring grooves 63 and gudgeon-pin bosses 64. The gudgeon-pin bosses 64 have side walls 65 which are substantially parallel to the piston axis. The piston skirt portion 62 comprises a PEEK moulding 66 having axially aligned rebates 67 which co-operate with the gudgeon-pin boss side walls 65 to provide radial location of the skirt portion 62. The skirt portion 62 further includes portions 68 to radially support the piston 60 on its loaded faces. The portions 68 may further include shaped ramps 69 to generate hydrodynamic lubricating oil films in operation. The skirt portion 62 is axially located on the crown portion 61 by means of stub-pins 70 which pass through holes 71 in the skirt portion and into the gudgeon-pin bores 72 (holes 71 and bores 72 are shown as dotted lines). The heads 73 of the plugs 70 are retained in position by rubbing against the associated cylinder wall (not shown) and are prevented from passing through the holes 71 by flanges 75.

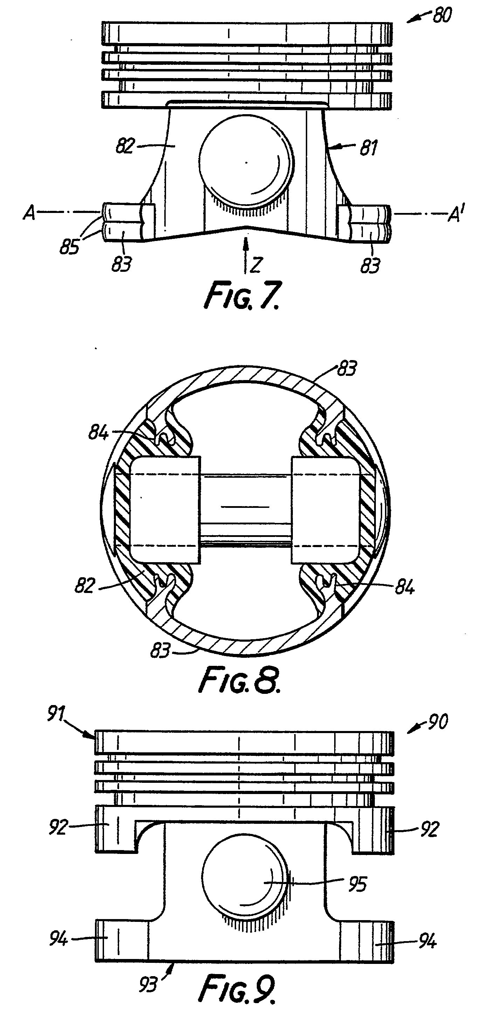

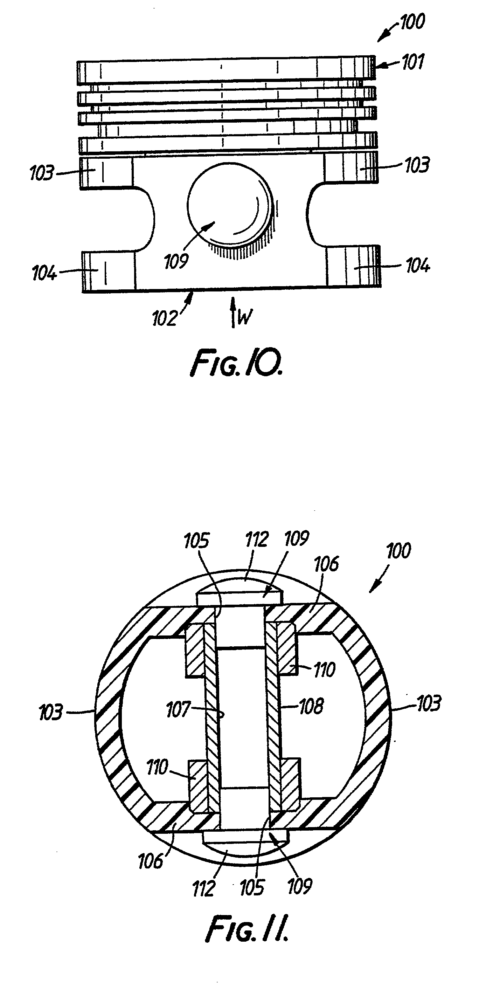

Figures 7 and 8 show a piston 80 of similar general construction to that shown in Figures 5 and 6 with the exception of the portions used to radially locate the piston in its associated cylinder during operation. In this case the skirt portion 81 comprises a PEEK moulding 82 having moulded integrally therein metal skirt components 83 having fingers 84 to provide secure location and retention within the moulding 82. The components 83 may also include shaped ramps 85 to assist in reducing operating friction.

Figure 9 shows a piston 90 having a crown portion 91 which also includes upper radial support and guidance lands 92 which co-operate with the supports 94 of the skirt portion 93. The skirt portion 93 is retained by stub-pins 95 passing through holes (not shown) into the gudgeon-pin bosses (not shown).

Figures 10 and 11 show a piston 100 having a crown portion 101 and a skirt portion 102. In this embodiment the skirt portion includes both upper and lower radial support and guidance lands 103 and 104 respectively. In this embodiment, however, the holes 105 in the side walls 106 of the skirt portion 102 are substantially the same diameter as the bore 107 of the gudgeon-pin 108. The gudgeon-pin 108 is retained by the skirt side walls 106. The skirt portion 102 is located in position by stub-pins 109 which co-operate with the gudgeon-pin bore 107. In this embodiment the skirt portion 102 is again radially located by the gudgeon-pin bosses 110. To assemble the piston and connecting rod (not shown) of Figures 10 and 11 the skirt portion 102 is first slipped over the connecting rod and the piston crown portion 101 is then assembled to the connecting rod 111 in the normal manner with the gudgeon-pin 108. The skirt portion 102 is then raised to engage the gudgeon-pin bosses 110 and is then located in position with the stub-pins 109. The stub-pins 109 are maintained in position by the heads 112 intermittently rubbing on the associated cylinder wall (not shown).

The diameter of hole in the piston skirt portion may of course be intermediate those of the gudgeon-pin outer diameter and inner diameter or may even be greater than the gudgeon-pin outer diameter such circumstances being accommodated by the use of plugs having stepped diameters.

The crown portion may be manufactured from any known metal alloy suitable for the intended application and may be manufactured by any known process. The crown portion may futher include reinforcing inserts of, for example, non-metallic fibres such as alumina, silica or zirconia.

The skirt portion may also include raised or recessed lands as aids to reducing piston friction or noise and may be made from any plastics material suitable for the environmental conditions pertaining in the piston skirt region of the particular application.

## Claims

1. An articulated piston, the piston comprising a crown portion (11, 61, 91, 101) having at least one piston-ring groove (13, 63) and gudgeon pin-bosses (14, 64, 110) for receiving a gudgeon-pin (16, 108) having a bore (46, 107) therethrough and a skirt portion (12, 41, 62, 81, 102) made of a plastics material and which is supported by at least one co-operating portion depending from the crown portion underside, the crown portion and skirt portion having diametrally directed bores (15, 17) therethrough, the bores having a common axis, the piston being characterised by the skirt portion being connected to the crown portion by stub-pins (18, 42, 43, 109) which pass through the diametrally directed bores (17) in the skirt portion into either the diametrally directed bore (15) of the crown portion or into the bore (107) of the gudgeon-pin.

2. A piston as claimed in Claim 1 characterised in that the stub-pins comprise a plastics material.

3. A piston as claimed in either Claim 1 or Claim 2 characterised in that the skirt portion comprises a plastics material moulding being radially locatable over the gudgeon-pin bosses depending from the crown portion underside and in that the skirt portion has supports (68) depending therefrom for radially locating and guiding the piston in a cylinder bore.

4. A piston as claimed in Claim 3 characterised in that the supports depending from the skirt include metallic portions (83) and which are moulded into the remaining plastics material skirt portion.

5. A piston as claimed in any one preceding claim characterised in that the stub-pins are axially located by intermittent rubbing contact with the associated cylinder wall.

6. A piston as claimed in any one preceding claim from 1 to 4 characterised in that the stub-pins are axially located by having co-operating extensions (44, 45) which pass through the gudgeon-pin bore (46) and lock together.

7. A piston as claimed in any one preceding claim characterised in that the stub-pins have flanged heads (20, 21, 73, 112).

8. A piston according to any one preceding claim characterised in that the stub-pins have stepped diameters.

**Patentansprüche**

1. Mehrteiliger Kolben, mit einem Kronenabschnitt (11, 61, 91, 101), der mindestens eine Kolbenringnut (13, 63) sowie Augen (14, 64, 110) zur Aufnahme eines mit einer Durchgangsbohrung (46, 107) versehenen Kolbenbolzens (16, 108) aufweist, und mit einem Mantelabschnitt (12, 41, 62, 81, 102) aus Kunststoff, der von wenigstens einem mit ihm zusammenwirkenden, von der Unterseite des Kronenabschnitts herabhängenden Abschnitt getragen wird, wobei Kronenabschnitt und Mantelabschnitt mit diametral durch sie verlaufenden Bohrungen (15, 17) versehen sind, die eine gemeinsame Achse aufweisen, dadurch gekennzeichnet, daß der Mantelabschnitt am Kronenabschnitt mittels Kurzbolzen (18, 42, 43, 109) befestigt ist, die durch die diametral verlaufenden Bohrungen (17) im Mantelabschnitt hindurch bis in die diametrale Bohrung (15) im Kronenabschnitt oder in die Bohrung (107) des Kolbenbolzens hineinragen.

2. Kolben nach Anspruch 1, dadurch gekennzeichnet, daß die Kurzbolzen aus Kunststoff bestehen.

3. Kolben nach Anspruch 1 oder 2, dadurch gekennzeichnet, daß der Mantelabschnitt ein Kunststoff-Formteil aufweist, das radial über den von der Unterseite des Kronenabschnitts herabhängenden Kolben-Bolzen-Augen angebracht ist, und daß der Mantelabschnitt von ihm herabragende Stützen (68) zur radialen Festlegung und Führung des Kolbens in einer Zylinderbohrung aufweist.

4. Kolben nach Anspruch 3, dadurch gekennzeichnet, daß die vom Mantelabschnitt herabragenden Stützen metallische Abschnitte (83) aufweisen, die in den übrigen Kunststoff-Mantelabschnitt eingeformt sind.

5. Kolben nach einem der vorangegangenen Ansprüche, dadurch gekennzeichnet, daß die Kurzbolzen axial durch zeitweisen Anlaufkontakt mit der zugeordneten Zylinderwand festgelegt werden.

6. Kolben nach einem der Ansprüche 1 bis 4, dadurch gekennzeichnet, daß die Kurzbolzen axial dadurch festgelegt werden, daß sie miteinander zusammenwirkende Verlängerungen (44, 45) aufweisen, die durch die Kolbenbolzen-Bohrung (46) ragen und miteinander verriegeln.

7. Kolben nach einem der vorangegangenen Ansprüche, dadurch gekennzeichnet, daß die Kurzbolzen mit Flanschköpfen (20, 21, 73, 112) versehen sind.

8. Kolben nach einem der vorangegangenen Ansprüche, dadurch gekennzeichnet, daß die Kurzbolzen abgestufte Durchmesser aufweisen.

**Revendications**

1. Piston articulé, comprenant une portion de tête (11, 61, 91, 101) comportant au moins une rainure de segments de piston (13, 63) et des bossages d'axe mécanique de piston (14, 64, 110) destinés à recevoir un axe mécanique (16, 108) présentant un alésage (46, 107) le traversant et une jupe de piston (12, 41, 62, 81, 102) réalisée en un matériau plastique et qui est supportée par au moins une portion coopérante dépendant du côté inférieur de la portion de tête, la portion de tête et la portion de jupe comportant des alésages dirigés diamétralement (15, 17) à travers celle-ci, les alésages présentant un axe géométrique commun, le piston étant caractérisé en ce que la portion de jupe est reliée à la portion de tête par des goupilles (18, 42, 43, 109) qui traversent les alésages dirigées diamétralement (17) dans la portion de jupe jusque dans soit l'alésage dirigé diamétralement (15) de la portion de tête soit jusque dans l'alésage (107) de l'axe mécanique du piston.

2. Piston selon la revendication 1, caractérisé en ce que les goupilles sont réalisées en un matériau plastique.

3. Piston selon la revendication 1 ou la revendication 2, caractérisé en ce que la portion de jupe comprend un moulage en matériau plastique pouvant être positionné radialement sur les bossages de l'axe mécanique du piston dépendant du côté inférieur de la portion de tête et en ce que la portion de jupe comprend des supports (68) dépendant de celle-ci destinés au positionnement et au guidage radial du piston dans un alésage de cylindre.

4. Piston selon la revendication 3, caractérisé en ce que les supports dépendant de la jupe comprennent des portions métalliques (83) et qui sont moulées dans la portion de jupe restante en matériau plastique.

5. Piston selon l'une quelconque des revendications précédentes, caractérisé en ce que les goupilles sont positionnées axialement par contact de friction intermittent avec la paroi de cylindre associé.

6. Piston selon l'une quelconque des revendications précédentes de 1 à 4, caractérisé en ce que les goupilles sont positionnées axialement par la présence de prolongements coopérants (44, 45) qui traversent l'alésage de l'axe mécanique (46) et se verrouillent mutuellement.

7. Piston selon l'une quelconque des revendications précédentes, caractérisé en ce que les goupilles présentent des têtes munies de collerettes (20, 21, 73, 112).

8. Piston selon l'une quelconque des revendications précédentes, caractérisé en ce que les goupilles présentent des diamètres échelonnés.

EP 0 222 359 B1

FIG. 1.

FIG. 2.

FIG. 3.

**FIG. 4.**

**FIG. 5.**

**FIG. 6.**

*80*

*82*    *81*

*A* ————    ———— *A'*

*85*    *83*    *Z*    *83*

**FIG. 7.**

*83*

*84*

*82*    *84*

*83*

**FIG. 8.**

*91*    *90*

*92*    *92*

*94*    *95*    *94*

*93*    **FIG. 9.**

*Fig. 10.*

*Fig. 11.*